# EUROPEAN PATENT APPLICATION

(11) **EP 2 605 154 A1**
(43) Date of publication of application: **19.06.2013**
(21) Application number: 11817751.8
(22) Date of filing: 08.08.2011
(51) Int. Cl.: G06F 17/30

(54) **METHOD AND SYSTEM FOR PROVIDING INFORMATION**

(30) Priority: 20.08.2010 CN 201010259462
(71) Applicant: Tencent Technology (Shenzhen) Company Limited, Shenzhen Guangdon 518044 (CN)
(72) Inventor: CHEN, Min, Guangdong 518044 (CN); HUANG, Xiaojun, Guangdong 518044 (CN); YANG, Yong, Guangdong 518044 (CN); ZHENG, Zhihao, Guangdong 518044 (CN); LIANG, Zhu, Guangdong 518044 (CN); CHEN, Shan, Guangdong 518044 (CN); XU, Xiao, Guangdong 518044 (CN)
(74) Representative: Gunzelmann, Rainer
(86) International application number: PCT/CN2011/078119
(87) International publication number: WO 2012/022224

(57) **Abstract**

Embodiments of the present invention disclose an information providing method and system. The method includes: receiving data collected through a control module of a client; collecting a user identification and operation information corresponding to the user identification in the data; associating and storing the user identification and the operation information corresponding to the user identification; and providing information for a user according to operation information corresponding to user identifications on a social relationship chain of the user. The system includes an interface module, a collecting module, a storing module and an information providing module. By the embodiments, the information related to the operation information of contacts is provided for the user. Since the social relationship chain is utilized, the possibility that the user is interested in the information related to the operation information of contacts is greater, and thus targeted information may be provided for the user.

## Description

### Field of the Invention

The present invention relates to computer technologies, and more particularly to an information providing method and system.

### Background of the Invention

At present, Internet has been popular in the life of people. More and more users participate in Internet actions. Therefore, the amount of Internet information is increased greatly, and a huge mass of operation information of Internet users also exists on Internet, for instance, information of accessing a certain link, information of publishing comments, information of uploading pictures, and information of publishing logs. Now, the operation information has become more and more valuable. Through analyzing the operation information of users, a system can fully learn the habits and interests of users, so as to provide better services.

In a conventional method for analyzing the operation information of a user on Internet, the amount of operation information is calculated, and then the popularity of some contents is evaluated according to the amount of operation information. In an improved analyzing method, the operation information of user is analyzed with reference to the user name of the user, and targeted information is provided for the user according to an analyzing result, for instance, some promotional information or other information is recommended to the user. However, in these conventional analyzing methods, the analyzing process is performed for a single user, and for a user whose operation information on Internet is relatively simple, it is difficult to extend the information source of the user; for a user whose operation information is little or dispersive on Internet, information provided for the user may not be required by the user. That is to say, the conventional analyzing methods are unable to provide targeted information for the user.

### Summary of the Invention

In view of above, it is necessary to provide a method for providing targeted information for a user.

An information providing method includes:
receiving data collected through a control module of a client;
collecting a user identification and operation information corresponding to the user identification in the data;
associating and storing the user identification and the operation information corresponding to the user identification; and
providing information for a user according to operation information corresponding to user identifications on a social relationship chain of the user.

Before storing the user identification and the operation information corresponding to the user identification, the method further includes: processing the user identification and the operation information corresponding to the user identification, wherein the processing includes at least one of:
filtering out operation information based on a predefined condition, sorting the operation information, and classifying the operation information.

The providing information for the user according to the operation information corresponding to the user identifications on the social relationship chain of the user includes:
classifying the operation information corresponding to the user identifications on the social relationship chain of the user, and performing statistical analysis on the amount of the operation information corresponding to the user identifications; and
providing the user with promotional information corresponding to a classification of operation information that has the largest amount of operation information.

The providing information for the user according to the operation information corresponding to the user identifications on the social relationship chain of the user includes:
performing statistical analysis on the amount of operation information corresponding to the user identifications on the social relationship chain of the user; and
providing the user with operation information that has the largest amount of operations.

The providing information for the user according to the operation information corresponding to the user identifications on the social relationship chain of the user includes:
receiving a search request of the user;
providing the user with operation information corresponding to a user identification on the social relationship chain of the user which meets one or more search conditions of the search request, and displaying to the user the operation information before other information.

The providing information for the user according to the operation information corresponding to the user identifications on the social relationship chain of the user includes:
receiving operation information of the user; and
displaying contacts of the user who have the same operation information as the user to the user.

In addition, it is necessary to provide a system for providing targeted information for a user.

An information providing system includes:
an interface module, configured to receive data collected by a control module of a client;
a collecting module, connected with the interface module, and configured to collect a user identification and operation information corresponding to the user identification in the data;
a storing module, configured to store a social relationship chain, and associate and store the user identification and the operation information corresponding to the user identification; and
an information providing module, configured to provide information for the user according to the operation information corresponding to the user identification on the social relationship chain of the user.

The information providing system further includes a processing module, connected with the collecting module and the storing module, and configured to process the user identification and the operation information corresponding to the user identification and store the processed user identification and operation information corresponding to the user identification in the storing module; wherein the processing includes at least one of:
filtering out operation information based on a predefined condition, sorting the operation information, and classifying the operation information.

The information providing module includes a promoting unit, configured to classify the operation information corresponding to the user identifications on the social relationship chain of the user, perform statistical analysis on the amount of the operation information corresponding to the user identifications, and provide the user with promotional information corresponding to a classification of operation information that has the largest amount of operation information.

The information providing module includes a recommending unit, configured to perform statistical analysis on the amount of operation information corresponding to the user identifications on the social relationship chain of the user, and provide the user with operation information that has the largest amount of operations.

The interface module is further configured to receive a search request of the user, and the information providing module further includes a search unit, configured to provide the user with operation information corresponding to a user identification on the social relationship chain of the user which meets one or more search conditions of the search request, and display to the user the operation information before other information.

The interface module is further configured to receive operation information of the user, and the information providing module further includes a converging unit, configured to display contacts of the user who have the same operation information as the user to the user.

In the above information providing method and system, the information related to the operation information of contacts is provided for the user. Since the social relationship chain is utilized, the possibility that the user is interested in the information related to the operation information of contacts is greater, and thus targeted information may be provided for the user.

### Brief Description of the Drawings

Figure 1 is a flowchart illustrating an information providing method according to an embodiment of the present invention.
Figure 2 is a schematic diagram illustrating the structure of an information providing system according to an embodiment of the present invention.
Figure 3 is a schematic diagram illustrating the structure of an information providing system according to another embodiment of the present invention.
Figure 4 is a schematic diagram illustrating the structure of an information providing system according to another embodiment of the present invention.

### Detailed Description of the Invention

In various Internet applications, a user usually has many friends or other social contacts, so as to form a social relationship chain. The contacts in the social relationship chain usually have the same or similar growing background (e.g., the contacts are schoolfellows or countrymen), profession (e.g., the contacts are partners or colleagues), interests and so on. Through analyzing the operation information of the contacts of a certain user, useful information for the user may be obtained and provided to the user.

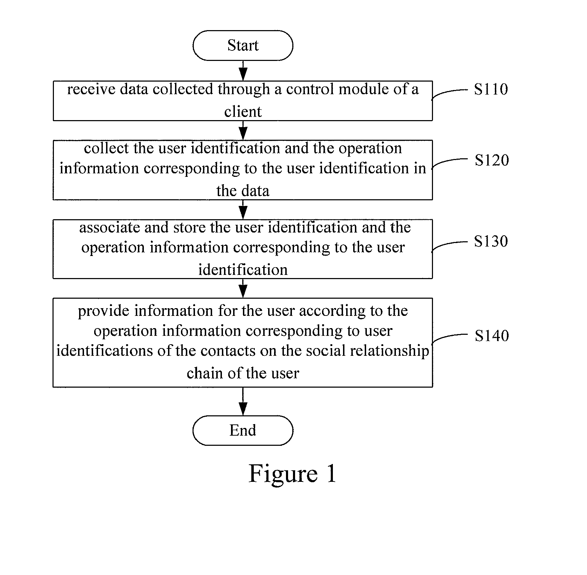

Figure 1 is a flowchart illustrating an information providing method according to an embodiment of the present invention. As shown in Figure 1, the method includes following steps.

In block S110, receive data collected through a control module of a client. The control module may be introduced by a specific website through an iframe sandbox or an innerHTML mode. As long as a user logs on the website through the control module, a user identification and operation information corresponding to the user identification may be obtained through the control module. The user identification, the operation information corresponding to the user identification and a variety of auxiliary information, e.g., source and destination addresses, are encapsulated into a package which has a data format applicable for network transmission, and the package is transmitted and received through a network.

In block S120, collect the user identification and the operation information corresponding to the user identification in the data. After the data is received, the user identification and the operation information corresponding to the user identification may be collected. The user identification is identity information for differentiating the user from other users on the network, where the identity information may be numericals, letters, any combination of numericals and letters, electronic mails and so on. The operation information corresponding to the user identification is information of operations performed by the user having the user identification, e.g., an operation of publishing a comment, an operation of uploading a picture, and an operation of accessing a certain link.

In block S130, associate and store the user identification and the operation information corresponding to the user identification. The associating and storing of the user identification and the operation refers to that the user identification, the operation information corresponding to the user identification and the corresponding relationship between the user identification and the operation information are stored together. When a certain user identification is found, it may be found that which operations are performed by a user having the user identification, and it may also be found that when the operations are performed.

In block S140, provide information for the user according to the operation information corresponding to user identifications of the contacts on the social relationship chain of the user. Various operations performed by the contacts of the user on Internet seem unrelated to the user, but may be concerned by the user because of the social relationship chain between the user and the contacts. Accordingly, information related to the operation information of the contacts may be provided to the user. For example, for contacts having the same interests as the user, if many contacts of the user access a certain link, contents corresponding to the link may be of interest to the user, and the link may be recommended to the user.

In an embodiment, the method further includes processing the user identification and the operation information corresponding to the user identification before storing the user identification and the operation information corresponding to the user identification. The user identification and the operation information corresponding to the user identification are processed to be in a predefined format, so as to be conveniently queried and searched. The processing includes one or more of the following methods.

A first method: filtering out operation information that meets a predefined condition. Through the filtering process, the needed operation information may be obtained. For example, for some websites with specific purposes, it is only needed to filter out operation information of a designated type. For example, for websites related to books, it is only needed to filter out operation information related to books.

A second method: sorting the operation information. The operation information may be sorted according to the amount, correlation degree and importance of the operation information. For example, the operation information is sorted according to the number of times that a book is saved, such that the amount of operation information of saving the same book is arranged in a descending order.

A third method: classifying the operation information. The operation information may be classified according to operation types, e.g., the operation information may be posting a comment, publishing a log, uploading a picture or accessing a link. Further, a certain operation type may be further classified into subcategories. For example, the operation information of accessing a link is classified into different subcategories such as accessing a link of sports, accessing a link of house property, accessing a link of military affairs and accessing a link of entertainment according to a link address, link characters and page contents.

In an embodiment, block S140 specifically includes: classifying and performing statistical analysis on the operation information corresponding to the user identifications on the social relationship chain of the user, and providing the user with promotional information corresponding to a category with the largest amount of operations performed by the contacts. For example, in the operation information of selecting an interest by the contacts of the user, the largest amount of selection operations is about selecting automobile. Though the user does not fill any interest, the possibility that the user likes automobile is large. Accordingly, promotional information such as news and advertisements related to automobile may be sent to the user. For another example, in the operation information of accessing a webpage by the contacts of the user, the largest amount of accessed webpage contents relates to cosmetics, which indicates that the contacts of the user are interested in the cosmetics, and thus the possibility that the user is interested in cosmetics is large. Accordingly, promotional information such as news and advertisements related to cosmetics may be sent to the user.

In an embodiment, block S 140 specifically includes: performing statistical analysis on the amount of operation information corresponding to the user identifications on the social relationship chain of the user, and providing the user with operation information with the largest amount of operations from the contacts. The invention or the embodiments here are not limited to the largest amount of operations. For example, in the operation information of accessing webpages by the contacts of the user, the amount of operation information of accessing webpage A is the largest, which indicates that the contacts of the user are interested in webpage A, and the possibility that the user is interested in webpage A is large. Accordingly, webpage A may be sent to the user. The amount of operation information, e.g., the number of webpages, may be one or more, which may be presented as follows: many of your friends have accessed the following webpages, and you may access webpage A, webpage B, webpage C... through clicking the following link(s). Of course, the operation information may be publishing a comment (by inputting text of the comment), selecting answer for an evaluation survey (an evaluation that is by-choice-only, such as a positive choice or a negative choice) and so on.

In an embodiment, block S140 specifically includes: receiving a search request of the user, providing the user with operation information corresponding to a user identification on the social relationship chain of the user which meets a search condition of the search request, and displaying to the user the operation information before other information. In this way, the operation information of the contacts of the user may be searched and displayed preferentially. This search mode is easier to meet the requirements of the user because the operation information of the contacts may be closely relevant to the user. For example, if the user inputs a key A, webpages containing the key A which are accessed by the contacts of the user, logs containing the key A which are published by the contacts of the user, and comments containing the key A which are published by the contacts of the user are taken as search results and are displayed before other information. The possibility that the user is interested in these search results is much larger than the possibility that the user is interested in general search results.

In an embodiment, block S140 specifically includes: receiving the operation information of the user, and displaying those contacts of the user who have the same operation information as the user to the user. Through displaying the contacts of the user who have the same operation information as the user, the user may learn that which contacts perform the same operation as the user, so as to facilitate the communication between them. For example, if the user accesses the webpage A and contacts A and B of the user also access the webpage A, the head portraits and nicknames of the contacts A and B may be displayed below the webpage A.

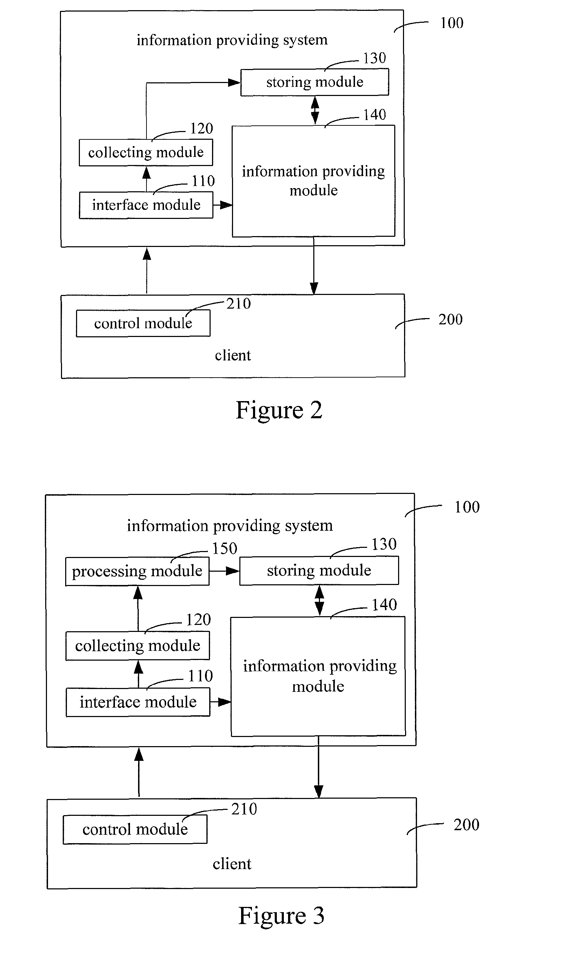

Figure 2 shows an information providing system 100. The information providing system 100 receives operation information generated by a client 200, and provides information for a user according to the operation information. The information providing system 100 includes an interface module 110, a collecting module 120, a storing module 130 and an information providing module 140.

The interface module 110 is configured to receive data collected by a control module 210 of the client 200. The control module may be introduced by a specific website through an iframe sandbox or an innerHTML mode. As long as a user logs on the website through the control module, a user identification and operation information corresponding to the user identification may be obtained through the control module. The user identification, the operation information corresponding to the user identification and a variety of auxiliary information, e.g., source and destination addresses, are encapsulated into a package which has a data format applicable for network transmission, and the package is transmitted and received through a network.

The collecting module 120 is connected with the interface module 110, and is configured to collect the user identification and the operation information corresponding to the user identification in the data. After receiving the data from the interface module 110, the collecting module 120 may collect the user identification and the operation information corresponding to the user identification in the data. The user identification is identity information for differentiating the user from other users on the network, where the identity information may be numericals, letters, any combination of numericals and letters, electronic mails and so on. The operation information corresponding to the user identification is operations performed by the user having the user identification, e.g., an operation of publishing a comment, an operation of uploading a picture, and an operation of accessing a certain link.

The storing module 130 is configured to store a social relationship chain, and associate and store the user identification and the operation information corresponding to the user identification. The associating and storing process refers to that the user identification, the operation information corresponding to the user identification and the corresponding relationship between the user identification and the operation information are stored together. When a certain user identification is found, it may be found that which operations have been performed by a user having the user identification, and it may also be found that when the operations were performed.

The information providing module 140 is configured to provide information for the user according to the operation information corresponding to user identifications on the social relationship chain of the user. Various operations performed by social contacts of the user on Internet seem irrelevant to the user, but may be of interest to the user because of the social relationship chain between the user and the contacts. Accordingly, the information related to the operation information of contacts may be provided to the user. For example, for contacts having the same interests as the user, if many contacts of the user access a certain link, contents corresponding to the link may be of interest to the user, and the link may be recommended to the user.

In an embodiment, as shown in Figure 3, the information providing system further includes a processing module 150. The processing module 150 is connected with the collecting module 120 and the storing module 130, and is configured to process the user identification and the operation information corresponding to the user identification and store the processed user identification and operation information corresponding to the user identification in the storing module 130. Processing methods of the processing module 150 includes one or more than one of following methods.

A first method: filtering out operation information that meets a predefined condition. Through the filtering process, the needed operation information may be obtained. For example, for some websites with specific purposes, it is only needed to filter out operation information of a designated type. For example, for websites related to books, it is only needed to filter out operation information related to books.

A second method: sorting the operation information. The operation information may be sorted according to the amount, correlation degree and importance of the operation information. For example, the operation information is sorted according to the number of times that a book is saved, such that the amount of operation information of saving the same book is arranged in a descending order.

A third method: classifying the operation information. The operation information may be classified according to operation types, e.g., the operation information may be posting a comment, publishing a log, uploading a picture or accessing a link. Further, a certain operation type may be further classified into subcategories. For example, the operation information of accessing a link is classified into different subcategories such as accessing a link of sports, accessing a link of house property, accessing a link of military affairs and accessing a link of entertainment according to a link address, link characters and page contents.

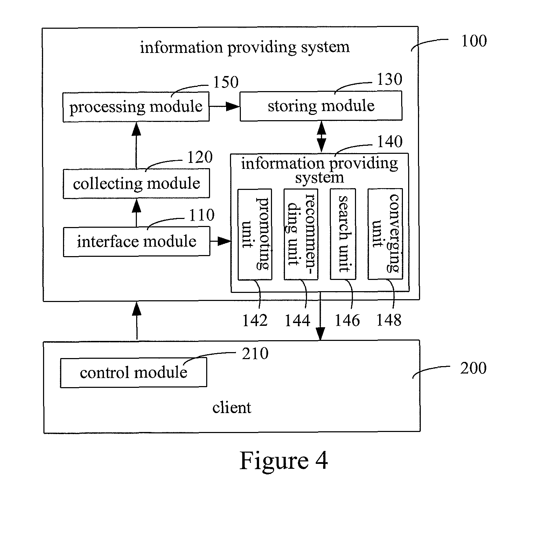

In an embodiment, as shown in Figure 4, the information providing module 140 includes a promoting unit 142, configured to classify and perform statistical analysis on the operation information corresponding to the user identifications on the social relationship chain of the user, and providing the promoting unit 142 of the user with promotional information corresponding to a category with the largest amount of operations by the contacts of the user. For example, in the operation information of selecting an interest by the contacts of the user, the largest amount of selection operations is operations of selecting automobile. Though the user does not fill any interest, the possibility that the user likes automobile is large. Accordingly, promotional information such as news and advertisements related to automobile may be sent to the user. For another example, in the operation information of accessing a webpage by the contacts of the user, the largest amount of accessed webpage contents relates to cosmetic, which indicates that the contacts of the user are interested in the cosmetics, and thus the possibility that the user is interested in cosmetics is large. Accordingly, promotional information such as news and advertisements related to cosmetics may be sent to the user.

In an embodiment, as shown in Figure 4, the information providing module 140 includes a recommending unit 144, configured to perform statistical analysis on the amount of operation information corresponding to the user identifications on the social relationship chain of the user, and provide the promoting unit 142 of the user with the largest amount of operations from the contacts of the user. For example, in the operation information of accessing webpages by the contacts of the user, the amount of operation information of accessing webpage A is the largest, which indicates that the contacts of the user are interested in webpage A, and the possibility that the user is interested in webpage A is large. Accordingly, webpage A may be sent to the user. The amount of operation information, e.g., the number of webpages, may be one or more, which may be presented as follows: many of your friends have accessed the following webpages, and you may access webpage A, webpage B, webpage C... through clicking the following link(s). Of course, the operation information may be publishing a comment (by inputting text of the comment), selecting answer for an objective evaluation (an evaluation that is by-choice-only, such as a positive choice or a negative choice) and so on.

In an embodiment, as shown in Figure 4, the interface module 110 is further configured to receive a search request of the user, and the information providing module 140 further includes a search unit 146 configured to provide the user with operation information corresponding to a user identification on the social relationship chain of the user which meets a search condition of the search request, and display the operation information before displaying other information to the user. In this way, the operation information of the contacts of the user may be searched and displayed preferentially. This search mode is easier to meet the requirements of the user because the operation information of the contacts may be closely relevant to the user. For example, if the user inputs a key A, webpages containing the key A which are accessed by the contacts of the user, logs containing the key A which are published by the contacts of the user, and comments containing the key A which are published by the contacts of the user are taken as search results and are displayed in the front other information. The possibility that the user is interested in these search results is much larger than the possibility that the user is interested in general search results.

In an embodiment, as shown in Figure 4, the interface module 110 is further configured to receive the operation information of the user, and the information providing module further includes a converging unit 148 configured to display those contacts of the user who have the same operation information as the user to the user. Through displaying the contacts of the user who have the same operation information as the user, the user may learn that which contacts perform the same operation as the user, so as to facilitate the communication between them. For example, if the user accesses the webpage A and contacts A and B of the user also access the webpage A, the head portraits and nicknames of the contacts A and B may be displayed below the webpage A.

In the above information providing method and system, the information related to the operation information of contacts is provided for the user. Since the social relationship chain is utilized, the possibility that the user is interested in the information related to the operation information of contacts is greater, and thus targeted information may be provided for the user. For a user whose operation information on Internet is relatively simple, the information related to the operation information of contacts is provided for the user through the social relationship chain, so as to extend the information sources of the user. For a user whose operation information is little or dispersive on Internet, the information related to the operation information of contacts is provided for the user, and thus the possibility that the user is interested in the information is larger than that in the conventional method.

The foregoing is only several specific and detailed embodiments of the present invention, which can not be used to limit the protection scope of the present invention. It should be noted that those skilled in the art may make improvement and modification without departing from the principle of the present invention, and the improvement and modification should be covered in the protection scope of the invention. And thus, the protection scope of the present invention should be defined by the claims.

## Claims

1. An information providing method, comprising:
receiving data collected through a control module of a client;
collecting a user identification and operation information corresponding to the user identification in the data;
associating and storing the user identification and the operation information corresponding to the user identification; and
providing information for a user according to operation information corresponding to user identifications on a social relationship chain of the user.

2. The information providing method of claim 1, before storing the user identification and the operation information corresponding to the user identification, further comprising: processing the user identification and the operation information corresponding to the user identification, wherein the processing comprises at least one of:
filtering out operation information based on a predefined condition, sorting the operation information, and classifying the operation information.

3. The information providing method of claim 1, wherein the providing information for the user according to the operation information corresponding to the user identifications on the social relationship chain of the user comprises:
classifying the operation information corresponding to the user identifications on the social relationship chain of the user, and performing statistical analysis on the amount of the operation information corresponding to the user identifications; and
providing the user with promotional information corresponding to a classification of operation information that has the largest amount of operation information.

4. The information providing method of claim 1, wherein the providing information for the user according to the operation information corresponding to the user identifications on the social relationship chain of the user comprises:
performing statistical analysis on the amount of operation information corresponding to the user identifications on the social relationship chain of the user; and
providing the user with operation information that has the largest amount of operations.

5. The information providing method of claim 1, wherein the providing information for the user according to the operation information corresponding to the user identifications on the social relationship chain of the user comprises:
receiving a search request of the user;
providing the user with operation information corresponding to a user identification on the social relationship chain of the user which meets one or more search conditions of the search request, and displaying to the user the operation information before other information.

6. The information providing method of claim 1, wherein the providing information for the user according to the operation information corresponding to the user identifications on the social relationship chain of the user comprises:
receiving operation information of the user; and
displaying contacts of the user who have the same operation information as the user to the user.

7. An information providing system, comprising:
an interface module, configured to receive data collected by a control module of a client;
a collecting module, connected with the interface module, and configured to collect a user identification and operation information corresponding to the user identification in the data;
a storing module, configured to store a social relationship chain, and associate and store the user identification and the operation information corresponding to the user identification; and
an information providing module, configured to provide information for the user according to the operation information corresponding to the user identification on the social relationship chain of the user.

8. The information providing system of claim 7, further comprising a processing module, connected with the collecting module and the storing module, and configured to process the user identification and the operation information corresponding to the user identification and store the processed user identification and operation information corresponding to the user identification in the storing module; wherein the processing comprises at least one of:
filtering out operation information based on a predefined condition, sorting the operation information, and classifying the operation information.

9. The information providing system of claim 7, wherein the information providing module comprises a promoting unit, configured to classify the operation information corresponding to the user identifications on the social relationship chain of the user, perform statistical analysis on the amount of the operation information corresponding to the user identifications, and provide the user with promotional information corresponding to a classification of operation information that has the largest amount of operation information.

10. The information providing system of claim 7, wherein the information providing module comprises a recommending unit, configured to perform statistical analysis on the amount of operation information corresponding to the user identifications on the social relationship chain of the user, and provide the user with operation information that has the largest amount of operations.

11. The information providing system of claim 7, wherein the interface module is further configured to receive a search request of the user, and the information providing module further comprises a search unit, configured to provide the user with operation information corresponding to a user identification on the social relationship chain of the user which meets one or more search conditions of the search request, and display to the user the operation information before other information.

12. The information providing system of claim 7, wherein the interface module is further configured to receive operation information of the user, and the information providing module further comprises a converging unit, configured to display contacts of the user who have the same operation information as the user to the user.
